# EUROPEAN PATENT SPECIFICATION

(11) **EP 2 937 639 B1**
(45) Date of publication and mention of the grant of the patent: **22.01.2020**
(21) Application number: 12890431.5
(22) Date of filing: 20.12.2012
(51) Int. Cl.: H04L 12/28, H04L 12/66, F24F 11/30, F24F 11/62, H04L 29/08, H04L 29/06

(54) **AIR CONDITIONING SYSTEM AND GATEWAY APPARATUS**
KLIMAANLAGENSYSTEM UND GATEWAY-VORRICHTUNG
SYSTÈME DE CONDITIONNEMENT D'AIR ET APPAREIL PASSERELLE

(43) Date of publication of application: 28.10.2015
(73) Proprietor: Mitsubishi Electric Corporation, Tokyo 100-8310 (JP)
(72) Inventor: IIDA, Takayoshi, Tokyo 100-8310 (JP)
(74) Representative: Pfenning, Meinig & Partner mbB
(86) International application number: PCT/JP2012/083037
(87) International publication number: WO 2014/097443

(56) References cited:
- JP-A- 2003 185 235
- JP-A- 2004 003 852
- JP-A- 2005 110 057
- JP-A- 2006 349 315
- JP-A- 2008 020 092
- JP-A- 2011 193 218
- JP-A- 2012 226 680
- US-A- 5 435 147
- US-A1- 2005 209 739

## Description

### Technical Field

The present invention relates to an air conditioning system.

### Background Art

In a conventional air conditioning system, where a collision domain of an air conditioning controller communication is shared among every air conditioning apparatus, a communication band is used efficiently by segmenting the collision domain into multiple segments (for example Patent Literature 1).

Conventionally, segmenting of the collision domain has been done by connecting a plurality of air conditioning apparatuses to an outdoor unit that has a plurality of communication ports, and the outdoor unit selecting an appropriate path based on a destination address.

In a further conventional air conditioning system, wherein a plurality of multi-airconditioners is grouped into some groups and a CPU is connected in parallel to individual multi-airconditioner groups and controls individual airconditioner groups, wherein the air conditioning system is capable of integrating information of multiple areas (for example Patent Literature 2). In a further air conditioning control system, wherein the system includes a building's central monitor board controlling and monitoring the operation of the individual air conditioners, and a centralized control unit relaying air conditioner control information outputted from the central monitor board and information indicating the operation status of the individual air conditioners. (for example Patent Literature 3).

### Citation List

### Patent Literature

Patent Literature 1: JP3995469 B2
Patent Literature 2: US 2005/0209739 A1
Patent Literature 3: US5435147

### Summary of Invention

### Technical Problem

In a conventional air conditioning system, however, since the outdoor unit segments the collision domain, when a plurality of communication ports and a collision domain segmentation function are not employed on an existing outdoor unit, the collision domain is not segmented and there is a problem that a communication band cannot be used efficiently.

The present invention mainly aims to solve such a problem described above. That is, the present invention mainly aims to segment the collision domain and enable efficient use of the communication band even on an air conditioning system including the outdoor unit that is not possible to segment the collision domain.

### Solution to Problem

In accordance with an aspect of the present disclosure, there is provided an air conditioning system and a gateway apparatus as defined by the independent claims 1 and 6. Other aspects of the present disclosure are defined in the dependent claims.

### Advantageous Effects of Invention

In the present invention, each gateway apparatus relays communication, via a connecting network and another gateway apparatus, between at least either one of an indoor unit and an outdoor unit within a management target partial network, and at least either one of an indoor unit and an outdoor unit within another partial network.

Therefore, a collision domain is segmented and efficient use of a communication band is enabled in an air conditioning system including the outdoor unit that is not possible to segment the collision domain.

### Brief Description of Drawings

[Fig. 1] a diagram illustrating an example of a configuration of an air conditioning system according to a first embodiment;
[Fig. 2] a diagram illustrating an example of a configuration of a gateway apparatus according to the first embodiment;
[Fig. 3] a diagram illustrating an example of an address table according to the first embodiment;
[Fig. 4] a flowchart illustrating an example of an operation of the gateway apparatus according to the first embodiment;
[Fig. 5] a diagram illustrating an example of a configuration of an air conditioning system according to a second embodiment;
[Fig. 6] a diagram illustrating an example of a configuration of a gateway apparatus according to the second embodiment;
[Fig. 7] a diagram illustrating an example of an address table according to the second embodiment;
[Fig. 8] a flowchart illustrating an example of an operation of the gateway apparatus according to the second embodiment;
[Fig. 9] a diagram illustrating an example of a configuration of an air conditioning system according to a fourth embodiment;
[Fig. 10] a diagram illustrating an example of a hardware configuration of the gateway apparatus according to the first through the fourth embodiments; and
[Fig. 11] a diagram illustrating an example of a configuration of a conventional air conditioning system.

### Description of Embodiments

### Embodiment 1.

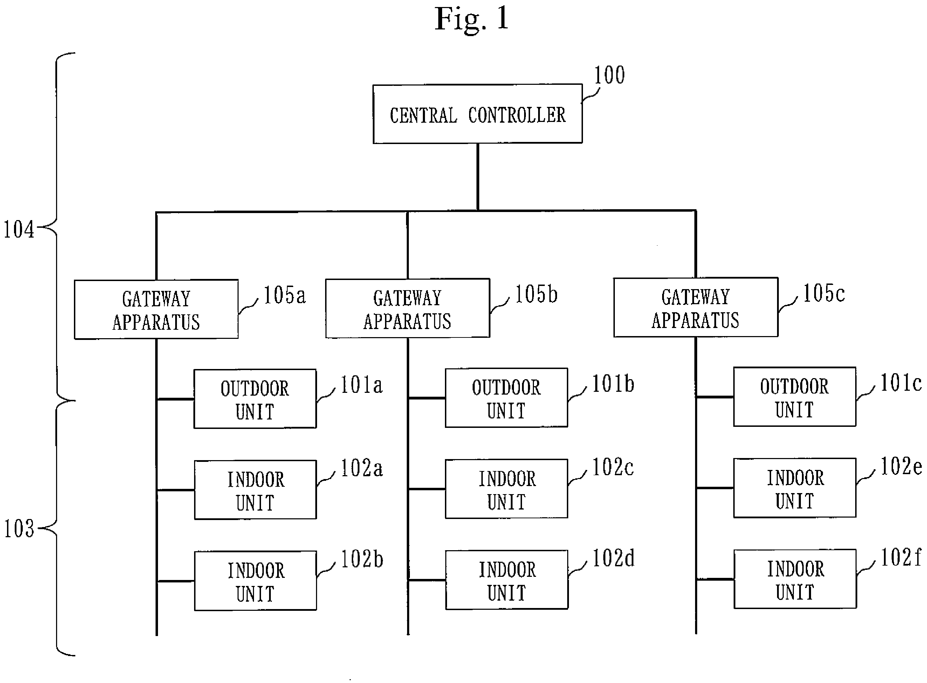

Fig. 1 illustrates an example of a configuration of an air conditioning system according to the present embodiment.

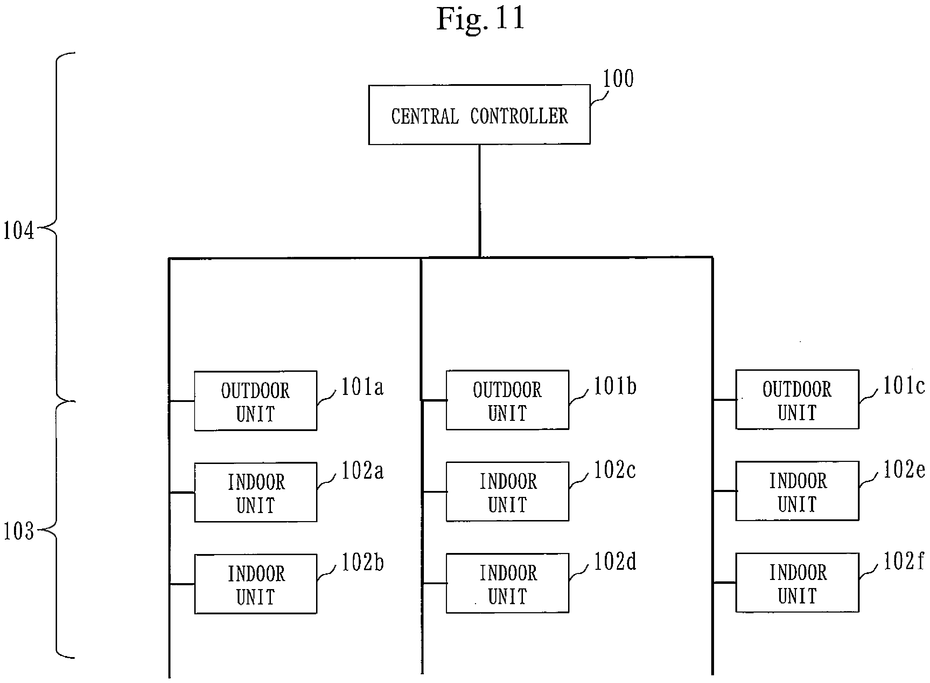

Fig. 11 illustrates an example of a configuration of a conventional air conditioning system.

Compared with Fig. 11, gateway apparatuses are added to Fig. 1.

In the present description, an outdoor unit, an indoor unit, a central controller, a gateway apparatus, etc. connected to an air conditioning system are generically called "an appliance".

In the present description, a system that includes the outdoor unit and the indoor unit as an air conditioning appliance will mainly be described, but an air handling unit, a ventilator, or another air conditioning appliance may be contained in the system.

An address represents an identifier uniquely allotted to every appliance.

In Fig. 1, a central controller 100 is a device that is possible to control all of the appliances.

For example, the central controller 100 is possible to transmit an operation stop signal to every indoor unit.

An outdoor unit 101 is an appliance that has only one communication port and operates in combination with an indoor unit 102.

A plurality of indoor units 102 may be connected to one outdoor unit 101.

The indoor unit 102 is an appliance that has only one communication port and operates in combination with the outdoor unit 101.

A plurality of indoor units 102 may be connected to one outdoor unit 101.

A partial network 103 is a network that connects the outdoor unit 101 and the indoor unit 102.

In the present embodiment, the partial network 103 is a bus network.

A connecting network 104 is a network that connects the central controller 100 and the outdoor unit 101.

In other words, the connecting network 104 connects a plurality of partial networks 103, and also connects the partial network 103 and the central controller 100.

The connecting network 104 is a bus network.

A gateway apparatus 105 is a data relay device, and includes a bridge function and an address table accompanying the bridge function.

The bridge function is utilized when a segmentation of a collision domain is executed.

The address table is utilized for determining if data should be passed through or stopped.

The partial network 103 connected to a gateway apparatus 105a, that is, the partial network 103 configured of an outdoor unit 101a, an indoor unit 102a, and an indoor unit 102b is called a partial network 103a.

The partial network 103 connected to a gateway apparatus 105b, that is, the partial network 103 configured of an outdoor unit 101b, an indoor unit 102c, and an indoor unit 102d is called a partial network 103b.

The partial network 103 connected to a gateway apparatus 105c, that is, the partial network 103 configured of an outdoor unit 101c, an indoor unit 102e, and an indoor unit 102f is called a partial network 103c.

The partial network 103 connected to each gateway apparatus 105 is called a management target partial network.

In other words, the management target partial network of the gateway apparatus 105a is the partial network 103a, the management target partial network of the gateway apparatus 105b is the partial network 103b, and the management target partial network of the gateway apparatus 105c is the partial network 103c.

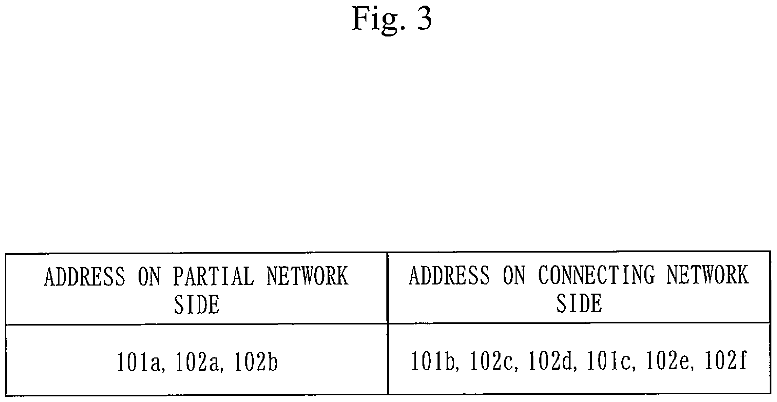

Next, an internal block of the gateway apparatus 105 will be described by referring to Fig. 3.

The gateway apparatus 105 relays data while determining whether transmission is possible or not by referring to the address table.

A connecting network reception section 200 is a reception interface of data transmitted from the connecting network 104.

The connecting network reception section 200 receives any kind of data at least once.

A connecting network transmission section 201 is a transmission interface for transmitting data from the partial network 103 to the connecting network 104.

The partial network reception section 202 is a reception interface of data transmitted from the partial network 103.

The partial network reception section 202 receives any kind of data at least once.

A partial network transmission section 203 is a transmission interface for transmitting data from the connecting network 104 to the partial network 103.

An address table management section 204 manages the address table where an address of an appliance is stored.

At the time when an address of an appliance is stored in the address table, information on whether the address is an address that exits on a connecting network 104 side or an address that exists on a partial network 103 side is also added.

The address table may be created in advance or may be created dynamically during communication.

When the address table is created dynamically, the address table management section 204 extracts a source address from a data frame received, and registers the source address to the address table.

An example of the address table is illustrated in Fig. 3.

A connecting network transmission determination section 205 determines whether or not to transmit the data frame to the connecting network 104 by referring to the address table.

A partial network transmission determination section 206 determines whether or not to transmit the data frame to the partial network 103 by referring to the address table.

Next, an operation of the air conditioning system according to the present embodiment will be described.

In Embodiment 1, the partial network 103 is a bus network, and the connecting network 104 is also a bus network of the same type (refer to Fig. 1).

In other words, every appliance is connected by the bus network of the same type.

The difference between the conventional and the present configuration is whether or not the gateway apparatus 105 exists. In the present embodiment, the configuration is of the gateway apparatus 105 connected between the outdoor unit 101 and the central controller 100.

In the conventional configuration, a medium is shared by every appliance, and if a destination address and the source address are stored in the data frame, the communication will be successful without transmission control.

On the other hand, in Embodiment 1, transmission control on the gateway apparatus 105 is performed.

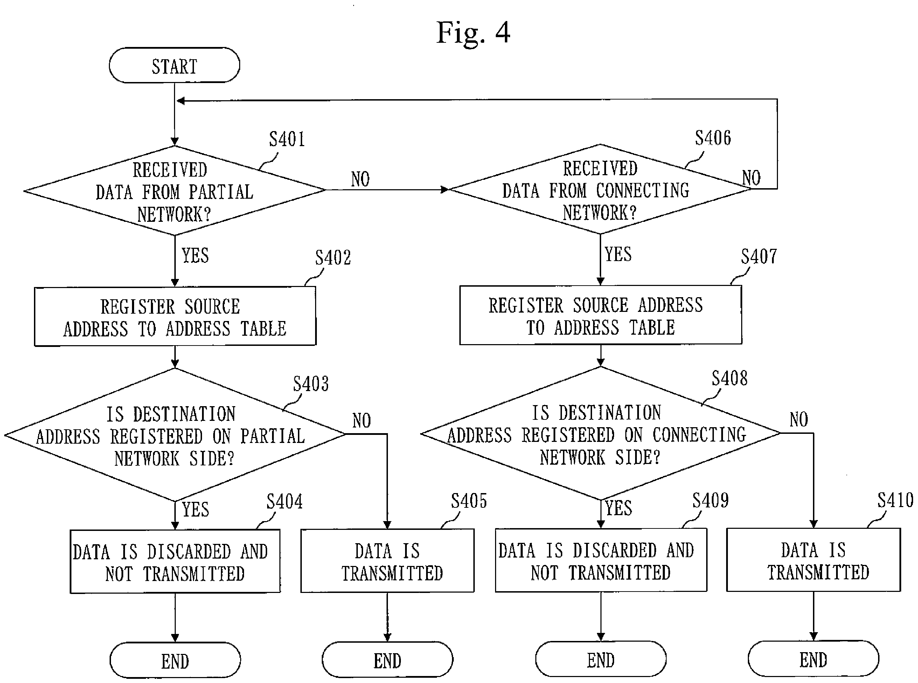

The transmission control on the gateway apparatus 105 is performed, for example, according to the flowchart of Fig. 4.

As an example of an operation, a system operation when the indoor unit 102a communicates with the indoor unit 102f will be described.
1) The indoor unit 102a transmits a data frame of a source address: 102a and a destination address: 102f to the partial network 103a.
2) The outdoor unit 101a, the indoor unit 102b, and the gateway apparatus 105a receive the data frame.
   Since the destination address is irrelevant to the outdoor unit 101a and the indoor unit 102b, data is discarded.
   Since the gateway apparatus 105a receives any kind of data at least once, the gateway apparatus 105a receives the data frame.
3) According to the flowchart of Fig. 4, the gateway apparatus 105 transmits the data.
   In the present example, because the data is received from the partial network 103a (YES at S401 of Fig. 4), the partial network transmission determination section 206 compares the destination address of the data frame to the address table, and finds that the destination address does not exist on a partial network 103a side in the address table (NO at S403), the connecting network transmission section 201 transmits the data frame to the connecting network 104 (S405).
   If the address table is created dynamically, the address table management section 204 extracts the source address at reception of the data, and stores it in the address table, together with information that the data frame is received from the partial network 103a (S402).
4) The data is transmitted from the gateway apparatus 105a to the connecting network 104. The central controller 100, the gateway apparatus 105b, and the gateway apparatus 105c receive the data frame.
   Since the destination address is irrelevant to the central controller 100, the data frame received is discarded.
   Since the gateway apparatus 105b and the gateway apparatus 105c always receive the data frame, the connecting network reception section 200 first receives the data frame (YES at S406), and then the address table management section 204 registers in the address table, the source address together with information that the data frame is received from the connecting network 104 (S407).
   If the address table has been created in advance and the source address and the information have been already registered, the address table may or may not be overwritten.
   Supposing that in the present example, the address table has been created in advance. In the gateway apparatus 105b, the partial network transmission determination section 206 examines the address connected on the connecting network 104 side of the address table of the address table management section 204 and performs transmission determination (S408).
   Then, since the destination address 102f exists on the connecting network 104 side, it is determined that the destination address 102f does not exist within its partial network 103b of the gateway apparatus 105b (YES at S408), and the date frame received is discarded (S409).
   If, however, the address table has not been created in advance, since the address identified as 102f has not been registered on the connecting network 104 side, the partial network transmission section 203 of the gateway apparatus 105b, transmits the data frame to the partial network 103b (S410).
   An appliance within the partial network 103b that received the data frame discards the data frame even if the appliance receives the data frame because the destination address is different.
   In the gateway apparatus 105c, the partial network transmission determination section 206 refers to the address table in the address table management section 204 and because the destination address 102f does not exist on the connecting network 104 side (NO at S408), the partial network transmission section 203 transmits the data frame to the partial network 103c (S410).
5) Since the indoor unit 102f receives the data frame, the communication is successful.

As described above, in the conventional configuration, the data frame is to be transmitted to an appliance that is irrelevant because the collision domain is not segmented. By installing an external gateway, however, setup, etc. on a conventional appliance becomes unnecessary, data transmission to the appliance that is irrelevant may be prevented, and efficient use of a communication band may be realized.

### Embodiment 2.

Embodiment 1 above illustrates an example of an operation when the partial network and the connecting network are of the same type of network. The present embodiment illustrates a case where a collision domain is segmented when a portion of the connecting network (between gateways) is by the Ethernet (registered trademark).

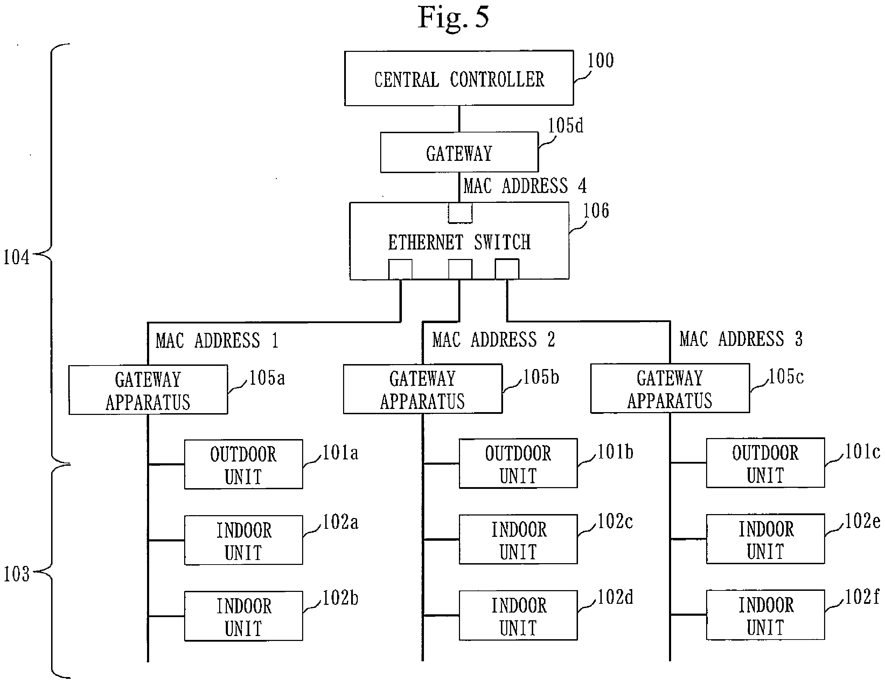

Fig. 5 illustrates an example of a configuration of an air conditioning system according to the present embodiment.

In Fig. 5, a central controller 100 is a device that is possible to control all of the appliances.

For example, the central controller 100 is possible to transmit an operation stop signal to every indoor unit.

An outdoor unit 101 is an appliance that has only one communication port and operates in combination with an indoor unit 102.

A plurality of indoor units may be connected to one outdoor unit.

The indoor unit 102 is an appliance that has only one communication port and operates in combination with the outdoor unit 101.

A plurality of indoor units 102 may be connected to one outdoor unit 101.

A partial network 103 is a network that connects the outdoor unit 101 and the indoor unit 102.

The partial network 103 is a bus network.

A connecting network 104 is a network that connects the central controller 100 and the outdoor unit 101.

In other words, the connecting network 104 connects a plurality of partial networks 103, and also connects the partial network 103 and the central controller 100.

The connecting network 104 is a bus network.

A gateway apparatus 105 is a data relay device that connects the partial network 103 and the connecting network 104 that is a network by the Ethernet (registered trademark).

The gateway apparatus 105 absorbs a difference in a data format (including an address architecture) between the Ethernet (registered trademark) and the partial network 103.

To absorb the difference, the gateway apparatus 105 includes a protocol conversion section and an address table.

The gateway apparatus 105 includes a MAC (Media Access Control) address in an interface on an Ethernet (registered trademark) side.

The gateway apparatus 105 utilizes the address table. Between gateway apparatuses 105, unicast communication is basically used, and if an address is unknown, broadcast communication is used.

An Ethernet (registered trademark) switch 106 is a general Ethernet (registered trademark) switch.

The Ethernet (registered trademark) switch 106 includes a plurality of communication ports and a MAC address table, and selects a transmission path based on the MAC address table.

The Ethernet (registered trademark) switch 106 is possible to segment the collision domain.

To provide more redundancy, a plurality of Ethernet (registered trademark) switches that have spanning tree protocols built in may be connected.

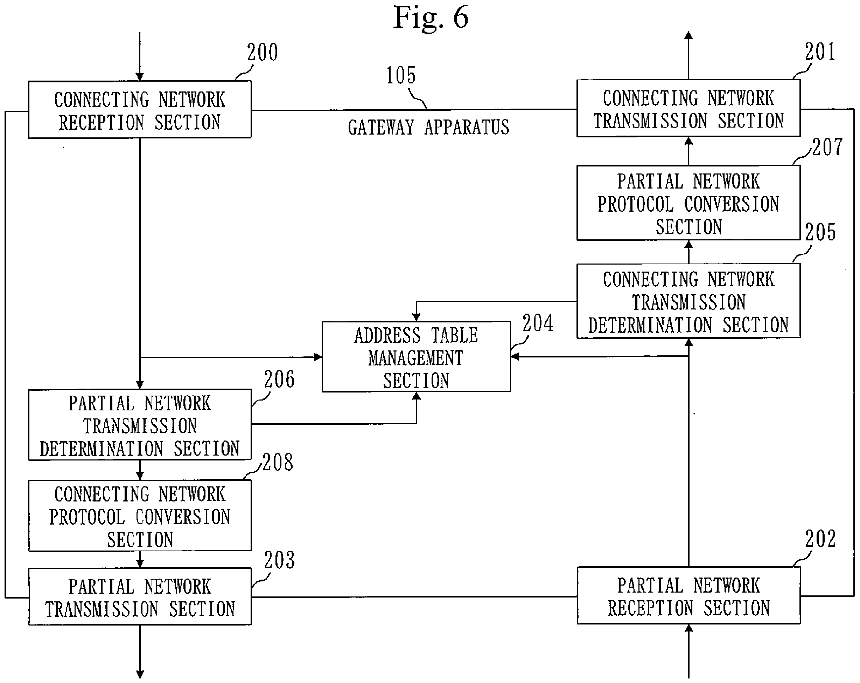

An internal block of the gateway apparatus 105 of the present embodiment is illustrated in Fig. 6.

The gateway apparatus 105 relays data while determining whether transmission is possible or not by referring to the address table.

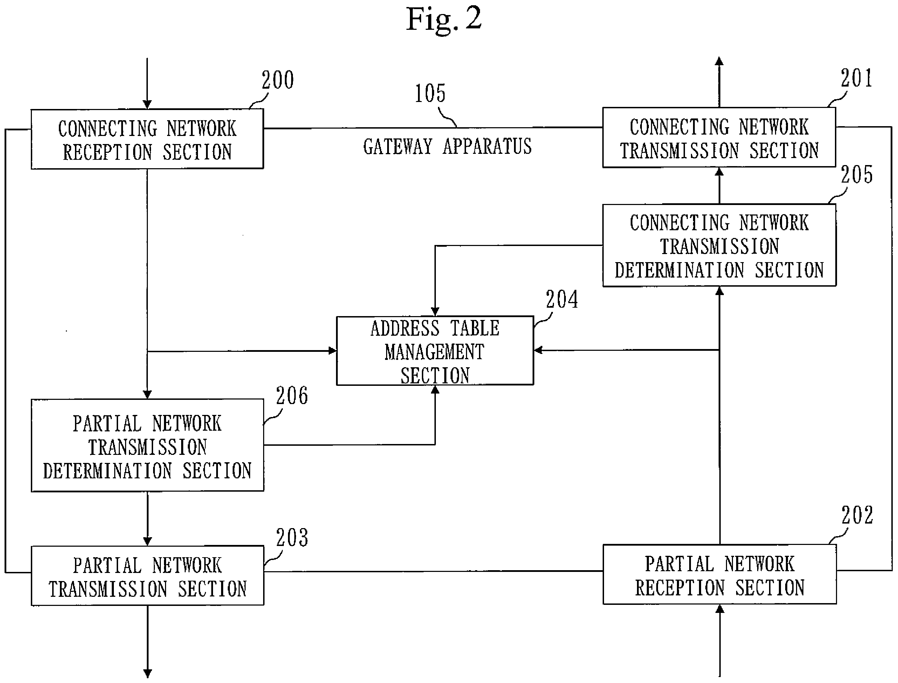

Of the configuration illustrated in Fig. 6, since the configuration other than the address table management section 204, a partial network protocol conversion section 207, and a connecting network protocol conversion section 208 is the same as those illustrated in Fig. 2, a description is omitted. A description only on the address table management section 204, the partial network protocol conversion section 207, and the connecting network protocol conversion section 208 will be given.

When the address table management section 204 stores an address of an appliance in the address table, the address table management section 204 relates a MAC address of the gateway apparatus 105 on a connecting network side and an address of an appliance on a partial network side and stores them.

The address table may be created in advance or may be created dynamically during communication.

When the address table is created dynamically, the address table management section 204 extracts a source MAC address and an address on the partial network side of a source from a data frame received, and registers the MAC address and the address on the partial network side of the source to the table.

Or, information of the table may be updated periodically by exchanging the address table between gateway apparatuses 105.

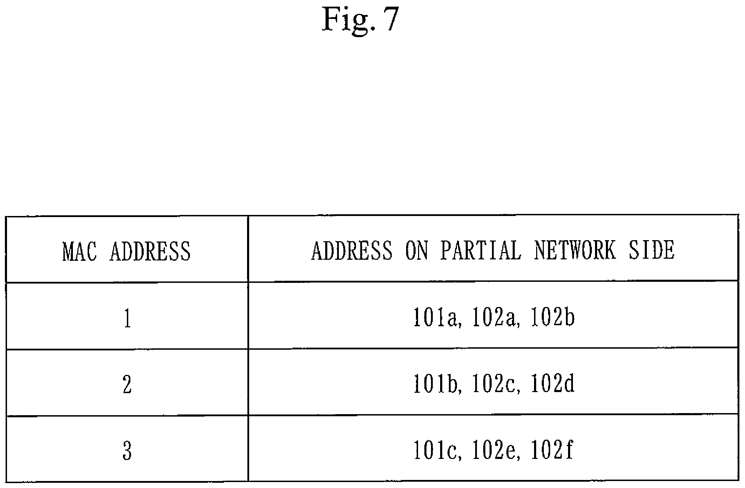

An example of the address table of the present embodiment is illustrated in Fig. 7.

The partial network protocol conversion section 207 converts a data format on the partial network 103 side to an Ethernet (registered trademark) format.

As a conversion method, the data format on the partial network side may be encapsulated by adding an Ethernet (registered trademark) header to the data format. Or, if a format is recovered eventually by the time of transmission to the partial network side, the format after the Ethernet (registered trademark) header may be converted to any preferred formats.

The connecting network protocol conversion section 208 converts data from the connecting network (Ethernet (registered trademark)) to a partial network format.

An operation of the air conditioning system according to the present embodiment will be described.

In Embodiment 2, the partial network 103 is a bus network, and the connecting network 104 is also a bus network, however, Ethernet (registered trademark) connection is used between the gateway apparatuses 105 (refer to Fig. 5).

The difference between the present embodiment and Embodiment 1 is that the connecting network 104 is a network by the Ethernet (registered trademark).

Therefore, segmentation of the collision domain is done by the Ethernet (registered trademark) switch 106.

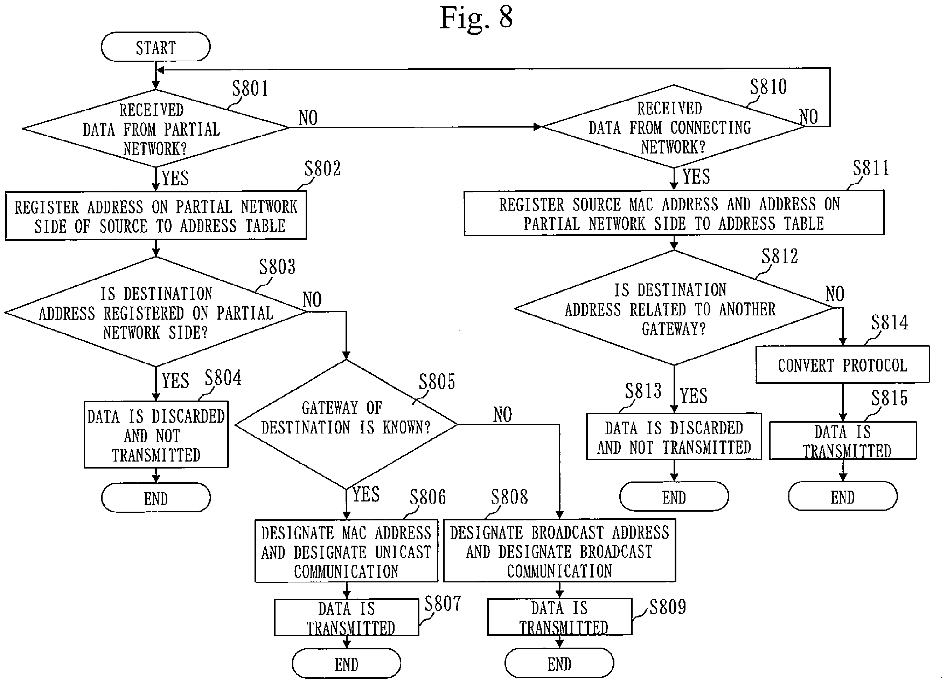

As an example of an operation, a system operation when an indoor unit 102a communicates with an indoor unit 102f will be described.
1) The indoor unit 102a transmits a data frame of a source address: 102a and a destination address: 102f to a partial network 103a.
2) An outdoor unit 101a, an indoor unit 102b, and a gateway apparatus 105a receive the data frame.
   Since the destination address is irrelevant to the outdoor unit 101a and the indoor unit 102b, data is discarded.
   Since the gateway apparatus 105a receives any kind of data at least once, the gateway apparatus 105a receives the data frame.
3) According to the flowchart of Fig. 8, the gateway transmits the data.
   In the present example, because the data is received from the partial network 103a (YES at S801 of Fig. 8) and the destination address does not exist on its partial network 103a side in the address table of the gateway apparatus 105a (NO at S803), the data frame is transmitted to a connecting network 104 side.
   At this time, the destination address 102f is already known to exist under MAC address 3 (YES at S805), the connecting network transmission section 201 sets the MAC address to 3 and transmits the data frame (S806, S807).
   There are two ways of transmission.
   A first is when under which gateway apparatus 105 the destination address exists is known according to the address table.
   In the present case, since the unicast communication becomes possible, the connecting network transmission section 201 uses the unicast communication by directly designating a destination MAC address (S806, S807).
   A second is when under which gateway apparatus 105 the destination address exists is unknown.
   In the present case, the connecting network transmission section 201 sets the destination MAC address to a broadcast address and uses the broadcast communication (S808, S809).
   In the present example, since a case where the address table is created in advance will be described, an example where the unicast communication is successful is described hereinafter.
   When the address table is created dynamically, the address table management section 204 extracts a source address on the partial network side at the time of reception of the data and relates the source address on the partial network side and its MAC address, and stores the source address on the partial network side in the address table.
4) The data is transmitted from the gateway apparatus 105a to the connecting network 104 side, and the data is transmitted to the Ethernet (registered trademark) switch 106.
   The Ethernet (registered trademark) switch 106 analyzes the destination MAC address and decides on a communication path by referring to the address table that the Ethernet (registered trademark) switch 106 has.
   Here, 3 is stored as the MAC address, and the data frame is transmitted to a gateway apparatus 105c.
   The gateway apparatus 105c receives the data frame from the connecting network 104 (YES at S810), and the address table management section 204 first registers the source MAC address and the address on the partial network side from the data frame to the address table (S811).
   If the address table has been created in advance and the addresses have been already registered, the address table may or may not be overwritten.
   Furthermore, the gateway apparatus 105c refers to its address table, and since the destination address 102f does not exist on the connecting network side (NO at S812), the connecting network protocol conversion section 208 performs protocol conversion (S814), and the partial network transmission section 203 transmits the data frame to a partial network 103c (S815).
5) Since the indoor unit 102f receives the data frame, the communication is successful.

As described above, even if the network between gateway apparatuses is a network by the Ethernet (registered trademark), data transmission to the appliance that is irrelevant may be prevented, and efficient use of a communication band may be realized.

By utilizing the Ethernet (registered trademark), the unicast communication is possible in the connecting network and a communication band of the connecting network may be used more efficiently than Embodiment 1.

Since the Ethernet (registered trademark) generally has higher speed than the bus network, a band extension is realized.

### Embodiment 3.

In Embodiment 2, communication is done by a local Ethernet (registered trademark), but if data is sent from a central controller on the outside of a router, an IP (Internet Protocol) address has to be given to a gateway.

To give the IP address in the case above, a DHCP (Dynamic Host Configuration Protocol) may be used or the IP address may be statically set.

In addition to a MAC address and an address of a partial network, IP address related information is also registered to the address table.

### Embodiment 4.

In an air conditioning system, information on indoor temperature and outdoor air temperature are used for basic control of an appliance.

Furthermore, there is a case where some appliances use data obtained from the same sensor. In the present case, reducing consumption of a communication band of a partial network is possible by adding a cache function to a gateway apparatus.

In the present embodiment, a configuration where the cache function is added to the configuration of the gateway apparatus 105 of Embodiment 1 will be described.

The cache function may also be realized in the configuration of the gateway apparatus 105 of other embodiments in a similar manner as the method described hereinafter.

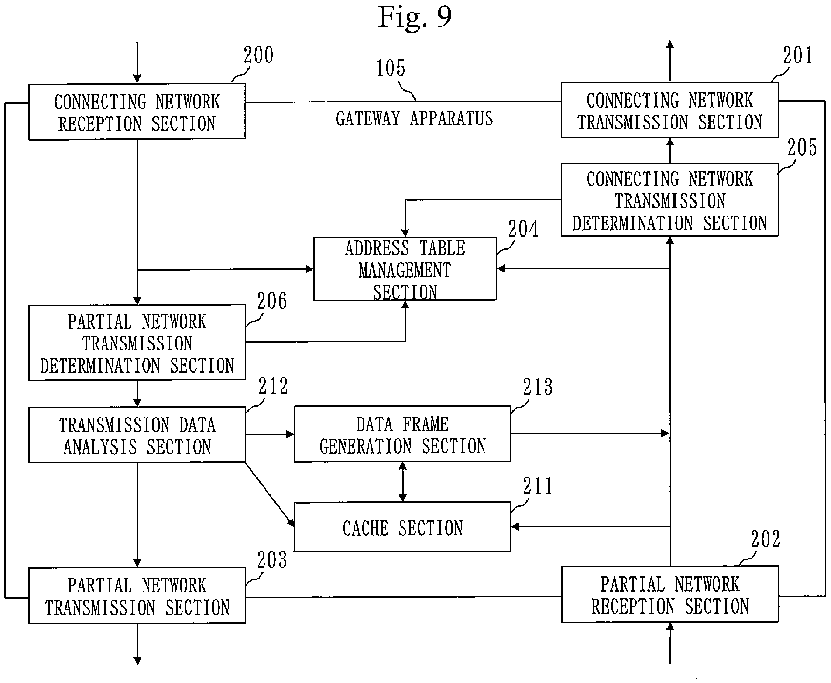

Fig. 9 is a diagram of an internal block of the gateway apparatus 105 including the cache function.

Since the elements other than a cache section 211, a transmission data analysis section 212, and a data frame generation section 213 are the same as those in Embodiment 1, a description is omitted.

The cache section 211 caches data received from the partial network 103.

The cache section 211 determines if the data may be cached, and organizes and saves the data for each address.

A freshness counter is on each data, and if the freshness counter surpasses a defined threshold value, the cache section 211 clears the data cached.

The threshold value may be arbitrarily set, and may be changed according to types of the data.

The freshness counter is reset when the same data is overwritten.

The transmission data analysis section 212 analyzes the data frame from the connecting network 104 to analyze what kind of data a source of the data frame is requesting.

As the result of the analysis, if the data requested by the source of the data frame is stored in the cache section 211, the transmission data analysis section 212 transfers the data frame to the data frame generation section 213, but does not transfer the data frame to the partial network transmission section 203.

If the data requested by the source of the data frame is not stored in the cache section 211, the data frame is transferred to the partial network transmission section 203 in a regular manner.

The data frame generation section 213 generates a data frame based on the data frame received from the transmission data analysis section 212 and the data from the cache section 211.

Then, the data frame generation section 213 transfers the data frame generated to a connecting network transmission determination section 205.

Next, an operation of the air conditioning system according to the present embodiment will be described.

An example of an operation in the system configuration of Embodiment 1 (Fig. 1) will be described. The example of the operation is carried out when the indoor unit 102b and the indoor unit 102c consecutively requests to obtain indoor temperature data that the indoor unit 102a has.
1) The indoor unit 102b transmits a request to obtain indoor temperature data to the indoor unit 102a.
2) The appliance within the partial network 103a checks a destination address, and discards the request to obtain indoor temperature data if the destination address is irrelevant.
   Since the gateway apparatus 105a obtains every data frame, the gateway apparatus 105a performs data transmission control as described above.
   In the present example, however, the data frame is forwarded to the cache section 211 in parallel to executing the data transmission control, and cached in the cache section 211 if the data should be cached.
   Since in the present example, the data is a frame for the request to obtain indoor temperature data, the data is not cached, and the data frame is not transferred to the connecting network 104.
3) The indoor unit 102a responds to the request from the indoor unit 102b.
   A response data frame is received in the appliances within the partial network 103a, and if irrelevant, the response data frame is discarded by each appliance.
   But since the gateway apparatus 105a obtains every data frame, the gateway apparatus 105a receives the response data frame.
   Then, in the gateway apparatus 105a, the partial network reception section 202 forwards the response data frame to the cache section 211 and the connecting network transmission determination section 205.
   In the present example, the cache section 211 recognizes the indoor temperature data in the response data frame to be worthy of caching, caches the indoor temperature data with information that the indoor temperature data is obtained from the indoor unit 102a, and starts the freshness counter.
   The connecting network transmission determination section 205 does not transmit the data frame to the connecting network 104.
4) The indoor unit 102c transmits the request to obtain indoor temperature data to the indoor unit 102a.
5) As with the operation example of Embodiment 1, the data frame of the request to obtain indoor temperature data is transmitted from the gateway apparatus 105b to the gateway apparatus 105a.
6) When the gateway apparatus 105a receives the data frame of the request to obtain indoor temperature data, the partial network transmission determination section 206 performs transmission determination.
   In the present example, since the transmission is allowed, the data frame of the request to obtain indoor temperature data is transferred to the transmission data analysis section 212.
   The transmission data analysis section 212 analyzes contents of the data to determine that the data is the request to obtain indoor temperature data being destined to the outdoor unit 102a.
   The transmission data analysis section 212 searches the cache section 211 for similar data, and if the similar data exists, forwards the data frame to the data frame generation section 213, and does not forward the data frame to the partial network transmission section 203.
   In the present example, since the freshness counter in the cache section 211 is not yet expired, the indoor temperature data of the indoor unit 102a is determined to exist in the cache section 211, and the data frame is transferred from the transmission data analysis section 212 to the data frame generation section 213.
7) The data frame generation section 213 inputs the indoor temperature data of the indoor unit 102a from the cache section 211. From the data frame received from the transmission data analysis section 212 and the indoor temperature data from the cache section 211, generates a data frame (a data frame that includes the indoor temperature data of the indoor unit 102a) that the indoor unit 102a is supposed to generate, in place of the indoor unit 102a.
8) The data frame generation section 213 forwards the data frame generated to the connecting network transmission determination section 205.
9) Hereinafter, transmission and reception of the data frame are carried out in a similar manner as the procedure of Embodiment 1.

As described above, when a cache function is utilized, data that could be obtained only when a communication band of a partial network is consumed, may be obtained without the consumption, and more efficient use of the communication band is realized.

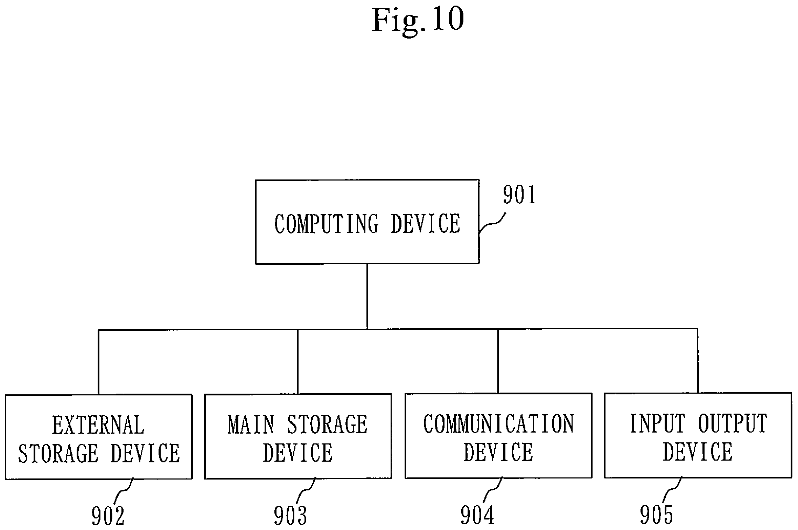

Lastly, an example of a hardware configuration of the gateway apparatus 105 described in Embodiments 1 through 4 will be described by referring to Fig. 10.

The gateway apparatus 105 is a computer and is possible to implement each element of the gateway apparatus 105 by a program.

In the hardware configuration of the gateway apparatus 105, a computing device 901, an external storage device 902, a main storage device 903, a communication device 904, and an input output device 905 are connected to a bus.

The computing device 901 is a CPU (Central Processing Unit) that executes programs.

The external storage device 902 is, for example, a ROM (Read Only Memory), a flash memory, or a hard disc device.

The main storage device 903 is a RAM (Random Access Memory).

The communication device 904 corresponds to physical layer of the connecting network transmission section 201, the partial network reception section 202, and the partial network transmission section 203.

The input output device 905 is, for example, a mouse, a keyboard, a display device, etc.

The programs are usually stored in the external storage device 902. The programs as loaded in the main storage device 903 are read into the computing device 901 sequentially and executed.

Programs are those that implement functions each described as "... section" illustrated in Fig. 2.

Furthermore, an operating system (OS) is also stored in the external storage device 902. At least a part of the OS is loaded into the main storage device 903, and the computing device 901 executes programs each of which implements the function of "... section" illustrated in Fig. 2 while executing the OS.

The information, data, signal values, and variable values representing the results of processes that are explained as "decision of ...", "determination of ...", "extraction of ...", "conversion of ...", "setting of ...", "registration of ...", "selection of ...", "generation of ...", "inputting of ...", "outputting of...", etc. in the description of Embodiments 1 through 4, are stored in the main storage device 903 as a file.

The configuration of Fig. 10 illustrates only an example of the hardware configuration of the gateway apparatus 105. The hardware configuration of the gateway apparatus 105 may have another configuration, not limited to the configuration illustrated in Fig. 10.

### Reference Signs List

100: central controller, 101: outdoor unit, 102: indoor unit; 103: partial network, 104: connecting network, 105: gateway apparatus, 106: Ethernet (registered trademark) switch, 200: connecting network reception section, 201: connecting network transmission section, 202: partial network reception section, 203: partial network transmission section, 204: address table management section, 205: connecting network transmission determination section, 206: partial network transmission determination section, 207: partial network protocol conversion section, 208: connecting network protocol conversion section, 211: cache section, 212: transmission data analysis section, 213: data frame generation section

## Claims

1. An air conditioning system having a connecting network and a plurality of partial networks (103),
within each of the plurality of partial networks not less than one indoor unit (101) of an air conditioner, each indoor unit having only one communication port, and an outdoor unit (102) of the air conditioner, the outdoor unit having only one communication port, are connected, and the plurality of partial networks being connected to each other via a connecting network (104) which connects the partial networks, the air conditioning system further comprising:
a plurality of gateway apparatuses (105), each connected to the not less than one indoor
unit and the outdoor unit within a respective management target partial network,
which is a partial network, among the plurality of partial networks, that is to be managed, and to the connecting network,
**characterized in that**:
each gateway apparatus is adapted to cache data that has been communicated within the management target partial network, and when transmission of data related to at least one of the indoor unit and the outdoor unit within the management target partial network is requested from at least one of the indoor unit and the outdoor unit within another partial network, to transmit the data cached to the indoor unit or the outdoor unit of said another partial network, via the connecting network and another gateway apparatus.

2. The air conditioning system of claim 1 further comprising:
a central controller (100) connected to the connecting network that adapted to control each indoor unit and each outdoor unit, wherein
each gateway apparatus is adapted to relay communication, via the connecting network, between at least one of the indoor unit and the outdoor unit within the management target partial network, and the central controller.

3. The air conditioning system of claim 1, wherein the connecting network is an Ethernet network.

4. The air conditioning system of claim 3, wherein each partial network is a network not being Ethernet, and each gateway apparatus is adapted to perform protocol conversion of data being communicated between the connecting network and the management target partial network.

5. The air conditioning system of claim 1, wherein each partial network is a bus network.

6. A gateway apparatus, wherein the gateway apparatus is connectable to an indoor unit and an outdoor unit within a management target partial network of an air conditioning system comprising a plurality of partial networks and being connectable to a connecting network, **characterized in that**:
the gateway apparatus is adapted to cache data that has been communicated within the management target partial network, and when transmission of data related to at least one of the indoor unit and the outdoor unit within the management target partial network is requested from at least one of the indoor unit and the outdoor unit within another partial network, to transmit the data cached to the indoor unit or the outdoor unit of said another partial network, via the connecting network and another gateway apparatus.

## Patentansprüche

1. Klimaanlagensystem, aufweisend ein Verbindungsnetzwerk und eine Vielzahl von Teilnetzwerken (103),
wobei innerhalb jedes der Vielzahl von Teilnetzwerken nicht weniger als eine Inneneinheit (101) einer Klimaanlage, wobei jede Inneneinheit nur einen Kommunikationsanschluss aufweist, und eine Außeneinheit (102) der Klimaanlage, wobei die Außeneinheit nur einen Kommunikationsanschluss aufweist, verbunden sind und wobei die Vielzahl von Teilnetzwerken über ein Verbindungsnetzwerk (104) miteinander verbunden sind, das die Teilnetzwerke verbindet, wobei das Klimaanlagensystem ferner umfasst:
eine Vielzahl von Gateway-Vorrichtungen (105), die jeweils mit der nicht weniger als einen Inneneinheit und der Außeneinheit innerhalb eines jeweiligen Verwaltungsziel-Teilnetzwerks, das ein Teilnetzwerk ist unter der Vielzahl der zu verwaltenden Teilnetzwerke, und mit dem Verbindungsnetzwerk verbunden sind, **dadurch gekennzeichnet, dass**:
jede Gateway-Vorrichtung ausgelegt ist zum Zwischenspeichern von Daten, die innerhalb des Verwaltungsziel-Teilnetzwerks kommuniziert wurden, und, wenn die Übertragung von Daten, die sich auf mindestens eine der Inneneinheit und der Außeneinheit innerhalb des Verwaltungsziel-Teilnetzwerks beziehen, von mindestens einer der Inneneinheit und der Außeneinheit innerhalb eines anderen Teilnetzwerks angefordert wird, zum Übertragen der zwischengespeicherten Daten an die Inneneinheit oder die Außeneinheit des anderen Teilnetzwerks über das Verbindungsnetzwerk und eine andere Gateway-Vorrichtung.

2. Klimaanlagensystem nach Anspruch 1, ferner umfassend:
eine mit dem Verbindungsnetzwerk verbundene zentrale Steuereinheit (100), die ausgelegt ist, jede Inneneinheit und jede Außeneinheit zu steuern, wobei
jede Gateway-Vorrichtung ausgelegt ist, über das Verbindungsnetzwerk Kommunikation innerhalb des Verwaltungsziel-Teilnetzwerks zwischen mindestens einer der Inneneinheit und der Außeneinheit und der zentralen Steuereinheit weiterzuleiten.

3. Klimaanlagensystem nach Anspruch 1, wobei das Verbindungsnetzwerk ein Ethernet-Netzwerk ist.

4. Klimaanlagensystem nach Anspruch 3, wobei jedes Teilnetzwerk ein Netzwerk ist, das kein Ethernet ist, und jede Gateway-Vorrichtung ausgelegt ist, um eine Protokollumwandlung von Daten durchzuführen, die zwischen dem Verbindungsnetzwerk und dem Verwaltungsziel-Teilnetzwerk kommuniziert werden.

5. Klimaanlagensystem nach Anspruch 1, wobei jedes Verbindungsnetzwerk ein Busnetzwerk ist.

6. Gateway-Vorrichtung, wobei die Gateway-Vorrichtung verbindbar ist mit einer Inneneinheit und einer Außeneinheit innerhalb eines Verwaltungsziel-Teilnetzwerks eines Klimaanlagensystems, umfassend eine Vielzahl von Teilnetzwerken und verbindbar mit einem Verbindungsnetzwerk, **dadurch gekennzeichnet, dass**
die Gateway-Vorrichtung ausgelegt ist zum Zwischenspeichern von Daten, die innerhalb des Verwaltungsziel-Teilnetzwerks kommuniziert wurden, und, wenn die Übertragung von Daten, die sich auf mindestens eine der Inneneinheit und der Außeneinheit innerhalb des Verwaltungsziel-Teilnetzwerks beziehen, von mindestens einer der Inneneinheit und der Außeneinheit innerhalb eines anderen Teilnetzwerks angefordert wird, zum Übertragen der zwischengespeicherten Daten an die Inneneinheit oder die Außeneinheit des anderen Teilnetzwerks über das Verbindungsnetzwerk und eine andere Gateway-Vorrichtung.

## Revendications

1. Système de climatisation présentant un réseau de raccordement et une pluralité de réseaux partiels (103), dans lequel, à l'intérieur de chaque réseau de la pluralité de réseaux partiels, pas moins d'une unité intérieure (101) d'un climatiseur, chaque unité intérieure présentant uniquement un port de communication, et pas moins d'une unité extérieure (102) du climatiseur, l'unité extérieure présentant uniquement un port de communication, sont connectées, et dans lequel les réseaux de la pluralité de réseaux partiels sont connectés les uns aux autres par l'intermédiaire d'un réseau de raccordement (104) qui connecte les réseaux partiels, le système de climatisation comportant en outre :
une pluralité d'appareils de passerelle (105) qui sont chacun connectés à ladite pas moins d'une unité intérieure et à ladite pas moins d'une unité extérieure dans un réseau partiel cible de gestion respectif, lequel correspond à un réseau partiel, parmi la pluralité de réseaux partiels, qui doit être géré, et au réseau de raccordement ;
**caractérisé en ce que** :
chaque appareil de passerelle est apte à mettre en mémoire cache des données qui ont été communiquées au sein du réseau partiel cible de gestion, et lorsqu'une transmission de données connexes à au moins l'une parmi l'unité intérieure et l'unité extérieure dans le réseau partiel cible de gestion est demandée à partir d'au moins l'une parmi l'unité intérieure et l'unité extérieure dans un autre réseau partiel, à transmettre les données mises en mémoire cache à l'unité intérieure ou à l'unité extérieure dudit autre réseau partiel, par l'intermédiaire du réseau de raccordement et dudit un autre appareil de passerelle.

2. Système de climatisation selon la revendication 1, comprenant en outre :
un contrôleur central (100) connecté au réseau de raccordement qui est apte à commander chaque unité intérieure et chaque unité extérieure, dans lequel chaque appareil de passerelle est apte à relayer une communication, par l'intermédiaire du réseau de raccordement, entre au moins l'une parmi l'unité intérieure et l'unité extérieure, dans le réseau partiel cible de gestion, et le contrôleur central.

3. Système de climatisation selon la revendication 1, dans lequel le réseau de raccordement est un réseau Ethernet.

4. Système de climatisation selon la revendication 3, dans lequel chaque réseau partiel est un réseau non Ethernet, et chaque appareil de passerelle est apte à mettre en œuvre une conversion de protocole de données communiquées entre le réseau de raccordement et le réseau partiel cible de gestion.

5. Système de climatisation selon la revendication 1, dans lequel chaque réseau partiel est un réseau de bus.

6. Appareil de passerelle, dans lequel l'appareil de passerelle peut être connecté à une unité intérieure et à une unité extérieure au sein d'un réseau partiel cible de gestion d'un système de climatisation comprenant une pluralité de réseaux partiels et pouvant être connecté à un réseau de raccordement,
**caractérisé en ce que** :
l'appareil de passerelle est apte à mettre en mémoire cache des données qui ont été communiquées dans le réseau partiel cible de gestion, et lorsqu'une transmission de données connexes à au moins l'une parmi l'unité intérieure et l'unité extérieure dans le réseau partiel cible de gestion est demandée à partir d'au moins l'une parmi l'unité intérieure et l'unité extérieure dans un autre réseau partiel, à transmettre les données mises en mémoire cache à l'unité intérieure ou à l'unité extérieure dudit un autre réseau partiel, par l'intermédiaire du réseau de raccordement et dudit un autre appareil de passerelle.
